# EUROPEAN PATENT APPLICATION

(11) **EP 4 822 199 A1**
(43) Date of publication of application: **14.10.2026**
(21) Application number: 25169331.3
(22) Date of filing: 09.04.2025
(51) Int. Cl.: F16C 35/063

(54) **RETENTION ASSEMBLY**

(71) Applicant: Siemens Gamesa Renewable Energy A/S, 7330 Brande (DK)
(72) Inventor: Redin, Juan, Titusville, 32780 (US)
(74) Representative: SGRE-Association

(57) **Abstract**

The invention describes a retention assembly (1) for installation on a rotary shaft (20), comprising a retaining ring (11), which retaining ring comprises an essentially cylindrical main body (111) dimensioned to fit about the rotary shaft and a number of flexible elements (113) extending axially from the main body, wherein each flexible element is dimensioned to clear the rotary shaft by a predefined gap (G) when mounting the retaining ring on the rotary shaft, and wherein each flexible element is adapted to bear an arrangement of inwardly-directed projections (12P) shaped to engage with the outer surface (20S) of the rotary shaft; and wherein the retention assembly further comprises a choking ring (13) adapted to exert an inwardly-directed radial force (13F) on the retaining ring during installation of the retention assembly to engage the projections of the flexible elements with the outer surface of the rotary shaft. The invention further describes a drivetrain comprising the inventive retaining assembly and a method of assembling such a drivetrain.

## Description

### Background

In a commonly used configuration, a wind turbine drivetrain comprises a low-speed shaft ("main shaft") which is turned by the aerodynamic rotor (usually three rotor blades mounted to a hub). The downwind end of the low-speed shaft turns the first stage of a gearbox. Usually, the low-speed shaft is part of a main bearing unit comprising a bearing about the upwind end ("drive end") of the shaft and another bearing about the downwind ("non-drive end") of the shaft. In a known four-point suspension, each bearing can be realised as a double-row spherical roller bearing, for example in an "O" configuration. Each bearing is held between the shaft and a main bearing housing, which can be mounted to a bedplate in the wind turbine nacelle, so that the main bearing unit effectively transfers loads from the main shaft via the bearings, housing and bedplate into the tower.

In such a configuration, each bearing comprises two sets of rollers contained between an inner ring and an outer ring. The inner ring of a bearing fits tightly about the main shaft, and the outer ring fits tightly against the inside of the main bearing housing. Various means can be deployed to fix the axial position of a bearing ring, i.e. to prevent axial displacement of the bearing ring during operation of the wind turbine. Usually, a floating bearing configuration is implemented at the drive end of the main shaft. In a known type of axial fixation means, the inner bearing ring is held in place on one side by a shoulder, and by a retaining assembly on the other side. The shoulder is formed to protrude radially outward from the body of the main shaft, and the retention assembly is installed after mounting the bearing. There are various types of retention assembly , e.g. a shaft nut (which is expensive to manufacture) or a more economical press-fit ring (which is difficult to install).

In wind turbines with rotor diameters up to 100 m, the known axial fixation means can be sufficient to prevent axial displacement of the bearing ring(s) and can cope with the observed main shaft deformations. However, wind turbines with much longer rotor blades are being developed. The correspondingly larger rotor diameters result in significantly greater radial and axial loads on the low-speed shaft of the drivetrain, and lead to larger deformations of the low-speed shaft during operation. Such deformations result in axial and tangential forces acting on the axial fixation means of a bearing and can ultimately displace any of the prior art retention assemblies mentioned above. Therefore, the known design solutions are no longer sufficient to reliably prevent axial displacement of a bearing ring during the service life of the wind turbine. When such a displacement occurs, the wind turbine must be shut down until the lengthy procedure of removing and replacing the entire main bearing unit is completed. Such a procedure involves a considerable loss of earnings in addition to the material cost, crane hire cost and, in the case of an offshore wind turbine, the expense of hiring a jack-up vessel.

It is therefore an object of the invention to provide an improved retention assembly.

This object is achieved by the claimed retention assembly, the claimed drivetrain, and by the claimed method of assembling a drivetrain.

### Description

The inventive retention assembly is intended for placing about a rotary shaft of a machine such as a wind turbine drivetrain shaft (also referred to as the low-speed shaft or main shaft). The purpose of the retention assembly is to prevent axial displacement of a bearing installed on the rotary shaft, i.e. one of the side faces of the retention assembly can directly abut a bearing. The outer diameter of the main shaft of a large wind turbine can be in the order of 1.0 m at the drive end, and its non-drive end may be somewhat narrower. The inner diameter of the inventive retention assembly can be assumed to be essentially the same as the shaft outer diameter at the mounting position of the retention assembly, in order to achieve a favourably tight fit.

According to the invention, the retention assembly comprises a retaining ring which has an essentially cylindrical main body dimensioned to fit about the rotary shaft, and a choking ring adapted to exert an inwardly-directed radial force on the retaining ring during installation of the retention assembly. The retaining ring further comprises a number of grippers extending axially from the main body. Each gripper is dimensioned to clear the rotary shaft by a predefined gap when mounting the retaining ring on the rotary shaft. Furthermore, each gripper is adapted to bear an arrangement of projections or protrusions that have an essentially radial orientation, and which are shaped to engage at least with the outer surface of the rotary shaft during installation of the retention assembly. From the above, it shall be understood that the radial-directed projections of the grippers will also clear the rotary shaft when mounting the retaining ring. To complete installation of the retention assembly, the inwardly-directed radial force exerted by the choking ring will engage the projections of the grippers with the outer surface of the rotary shaft, i.e. the projections will be at least partially embedded in the outer surface of the rotary shaft.

In the context of the invention, a gripper shall be understood as a non-rigid element, i.e. an element that allows a degree of deflection relative to the main body of the retaining ring. Specifically, it shall be understood that a gripper is formed to undergo some degree of flexion (it may be deflected "inwards", i.e. towards the rotary shaft, by a sufficiently large force) and also to undergo some degree of extension (it may be deflected "outwards", i.e. away from rotary shaft, by a sufficiently large force). The forces resulting in flexion or extension of a flexible element will be dealt with in more detail below. Since a flexible element extends axially from the main body, it may be referred to as a flexible axial extension of the main body.

The inwardly-directed face of each flexible element is adapted to bear an arrangement of projections, from which it shall be understood that the projections can be part of a further component that is mounted to that inwardly-directed face. Alternatively, the projections may be formed as part of the inwardly-directed face of a flexible element. A projection can be a pin or similar, for example a pin made of a hard material, and with a threaded end that is screwed into a threaded bore formed in the inwardly-directed face. In a further alternative embodiment, the projections may be provided on the rotary shaft and can be embedded in the inwardly-directed face of a flexible element during installation of the inventive retention assembly. For example, the projections may face outward from a band that is placed about the rotary shaft and secured in some way, for example using suitable screws or an adhesive bond.

An advantage of the inventive retention assembly is that it is highly effective at preventing any tangential or axial displacement of the retaining ring relative to the main shaft during operation of the machine. This effectiveness is achieved by the "bond" established when the choking ring forces the flexible elements to turn slightly inwards, closing the gap between flexible elements and rotary shaft, and embedding the projections in the opposing surface. Once embedded in this manner, the projections essentially form an equal number of radially-directed physical bonds between the rotary shaft and the retaining ring.

The claimed drivetrain comprises a rotary shaft; a number of bearings arranged about the rotary shaft; and an axial fixation arrangement for each bearing, wherein at least one axial fixation arrangement comprises an instance of the inventive retaining assembly mounted about the rotary shaft to abut the bearing.

During operation of the machine of which the drivetrain is a part, the radially-directed physical bonds between the rotary shaft and the retaining ring are highly effective at preventing axial and tangential displacement of the retaining ring relative to the rotary shaft. As a result, the inventive retaining ring is highly effective at preventing axial displacement of a bearing mounted on the shaft. An axial fixation arrangement comprising the inventive retaining ring can therefore maintain the axial position of a bearing about the rotary shaft of the drivetrain during the service life of the machine. In the case of a modern-day large wind turbine, the service life of a main bearing unit can exceed twenty years, so that the inventive retention assembly can contribute to a significant reduction in maintenance and repair costs.

An advantage of the claimed drivetrain is that the retention assembly effectively cannot be displaced relative to the shaft during operation of the wind turbine: suppression of axial or tangential displacement is achieved by the novel configuration of the retention assembly, with its physical bond between the flexible elements and the shaft.

According to the invention, a drivetrain is assembled by arranging a number of bearings about the rotary shaft and providing an axial fixation arrangement for each bearing, wherein at least one axial fixation arrangement is provided by installing an instance of the inventive retaining assembly about the rotary shaft to abut a bearing. The inventive drivetrain can be assembled in a favourably straightforward procedure, since the steps of installing the inventive retaining assembly are uncomplicated.

Particularly advantageous embodiments and features of the invention are given by the dependent claims, as revealed in the following description. Features of different claim categories may be combined as appropriate to give further embodiments not described herein.

For the sake of simplicity, but without restricting the invention in any way, it shall be assumed in the following that the drivetrain is a wind turbine drivetrain, and that the rotary shaft is the low-speed shaft of the drivetrain.

The inventive retention assembly can be deployed in a number of configurations. For example, an axial fixation arrangement of a bearing can comprise a shoulder formed to protrude radially outward from the body of the low-speed shaft, and an instance of the claimed retention assembly on the other side. Alternatively, an axial fixation arrangement of a bearing can comprise an instance of the claimed retention assembly on one side of the bearing, and a conventional retention assembly , for example a press-fit ring, on the other side. Equally, an axial fixation arrangement of a bearing can comprise an instance of the claimed retention assembly on each side of the bearing.

In a preferred embodiment of the invention, the flexible elements are arranged on one side of the retaining ring, i.e. the side that will face away from the bearing. The side of the retaining ring that will face the bearing can have the form of an annulus matching a contact surface of the bearing, allowing the retaining ring to abut the bearing when the retaining ring is mounted on the rotary shaft.

The design of the retaining ring allows each flexible element to have a surface that faces the shaft, initially clearing the shaft to allow the retaining ring to be mounted on the shaft, and also allows the inwardly-directed projections of a flexible element to engage with or grip the outer surface of the rotary shaft in the manner of a claw (after mounting the choking ring to complete installation of the retention assembly). A flexible element may therefore be referred to in the following as a "gripper" or "claw".

To permit the desired amount of flexion/extension between the main body and a gripper, the retaining ring preferably comprises a curved transition region that acts as a stiff hinge, and wherein the curved transition region is shaped on the basis of a desired flexibility or range of deflection of the gripper. In an axial fixation arrangement of a large wind turbine, deformations of the main shaft can be in the order of a few millimetres, and the grippers of the inventive retaining ring are intended to at least partially "absorb" such deformations. In a preferred embodiment of the invention, the thickness of a curved transition may be chosen, for example, on the amount of torque to be transferred when the choking ring is installed and a desired degree of flexibility.

Preferably, the grippers "follow" the circular shape of the retaining ring, i.e. each gripper is arc-shaped. Design parameters such as the size of each gripper, the number of grippers, the distribution of the grippers, the gaps between adjacent grippers etc., can be chosen according to the intended application, for example on the basis of rotor blade length. In an exemplary embodiment for use with a rotary shaft with a diameter of 1 metre or more, a retaining ring can have an arrangement of 20 or more grippers extending axially about 50 mm from the main body of the retaining ring. Each gripper can subtend a central angle in the order of 10°. Preferably, the parameters that determine the total contact surface between the grippers and the main shaft (e.g. the number of grippers and the axial length and central angle of each gripper) are chosen to achieve a desired pressure when the choking ring is installed, for example a pressure in the order of 50 - 400 MPa.

The grippers can be arranged equidistantly about the retaining ring. However, in a main bearing unit as described above, the loads "seen" at the drive-end of the shaft during operation of the wind turbine are generally different in direction and magnitude than the loads that are "seen" at the non-drive end. Therefore, in a particularly preferred embodiment of the invention, the distribution of the grippers of a retaining ring is determined on the basis of the intended position of that retaining ring on the rotary shaft. For example, a retaining ring intended as part of the axial fixation arrangement of a drive-end bearing can have a configuration in which the flexible elements in the lower half of the retaining ring are wider and/or closer together than the flexible elements in the upper half. Similarly, a retaining ring intended as part of the axial fixation arrangement of a non-drive-end bearing can have a configuration in which the flexible elements in the upper half of the retaining ring are wider and/or closer together than the flexible elements in the lower half.

The retaining ring of the inventive retention assembly can be manufactured in a number of ways. In a preferred embodiment of the invention, the retaining ring is a one-piece component made of a suitable material such as structural steel, hardened steel, etc. The retaining ring can be cast to achieve the desired configuration of grippers extending from a main body, or can be machined from a straight hollow cylinder to remove material as necessary in order to form the desired configuration of grippers extending from a main body.

The inventive retention assembly can be manufactured to achieve a press fit or interference fit between the retaining ring and the rotary shaft. Alternatively, the retaining ring of the inventive retention assembly may be provided with an inner thread to engage with an outer thread formed on the rotary shaft.

As explained above, the inwardly-directed projections of each gripper will be made to engage with the outer surface of the rotary shaft during installation of the retention assembly. Such radial projections are preferably rigid in the radial, torsional and axial directions and can be provided in a number of ways. For example, the inwardly-directed projections of a gripper can be realised as a reticulated surface or, as mentioned above, small hard projections can be screwed into the inwardly-directed face of a gripper. However, such embodiments can be costly to implement. In a particularly preferred embodiment of the invention, the inwardly-directed projections of a gripper are provided in the form of a micro-mechanical fixation, by mounting a micro-locking shim or "friction shim" to the inwardly-directed face of the gripper. Such a shim comprises a thin but rigid substrate, and an even distribution of very small but hard particles partially embedded on both sides of the substrate. The exposed portions of the shim particles can have an average height in the order of a few tens of micrometres. The force exerted by the installed choking ring partially embeds the hard particles of the micro-locking shim in the mating faces of the grippers and the main shaft, creating an interference fit. A good interference fit effectively "locks" the retaining ring about the shaft, preventing its displacement during operation of the wind turbine. The effectiveness of the interference fit depends on the level of penetration of the hard particles for a given particle density. Each hard particle of the micro-locking shim creates a small indention, pit or cavity in the surface into which it is pressed. The possible dimensions of a cavity - i.e. its depth and width - are determined by the shape and size of the corresponding shim particle.

A micro-locking shim may comprise a planar metal body with an inward-facing surface and an outward-facing surface, and an arrangement of particles protruding from both sides of the metal body. During installation, when the choking ring is mounted about the retaining ring, the inwardly-directed projections of a micro-locking shim will be embedded in the outer surface of the rotary shaft, and the outwardly-directed projections will be embedded in the inwardly-directed face of the gripper. A micro-locking shim can be secured to the inwardly-directed face of the gripper in any suitable manner, for example using one or more threaded fasteners.

The step of installing the retention assembly can be done at a manufacturing facility in which the main bearing unit is assembled. The inventive retention assembly can be installed to abut against a previously mounted bearing inner ring. Installation can be done by placing the retaining ring onto the main shaft and subsequently mounting the choking ring about the retaining ring to force the grippers inwards towards the shaft, closing the gap or clearance and causing the radially-oriented projections to be embedded in the outer surface of the rotary shaft. In an embodiment with micro-locking shims, this step ensures that the radially-oriented projections are also embedded in the inwardly-directed face of each gripper.

In a preferred embodiment of the invention, the retaining ring has an essentially uniform outer diameter over the main body and the grippers. The choking ring can therefore be advantageously formed as a straight hollow cylinder which can be mounted onto the retaining ring. In an exemplary procedure, the choking ring can be heated so that it expands by an amount sufficient to enlarge its inner diameter so that it can be pushed onto the retaining ring. The choking ring then cools and contracts, reducing its inner diameter to achieve the desired interference fit with the retaining ring and the inward deflection of the grippers. In an alternative embodiment, the choking ring of the inventive retention assembly can be a two-part component, for example each part comprising a half-circle retaining ring. Both halves may be joined using a suitably robust arrangement of connectors, for example transverse threaded fasteners.

As explained above, the retaining ring can be machined from a straight hollow cylinder to form the desired configuration of grippers extending from a main body. In a first step, the dimensions of the grippers are determined, and material is removed from one side of the cylinder to form the grippers. In an annular region between the grippers and the main body, further material is removed to form the transition regions or "hinges" which will allow the desired amount of flexion/extension of the grippers.

The inwardly-directed faces of the grippers essentially describe a circle. The diameter of this circle is slightly larger than the outer diameter of the shaft in order to achieve the desired clearance during the mounting stage. Of course, the diameter of the rotary shaft can vary over the axial extent of the retention assembly. For example, the shaft may have a first outer diameter underneath the main body of the retaining ring, and a second, smaller outer diameter underneath the grippers. For such a rotary shaft, it is straightforward to machine the retaining ring accordingly.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an axial cross-section through a main bearing unit of a wind turbine drivetrain;
Figures 2 - 9 illustrate exemplary embodiments of the inventive retention assembly.

In the diagrams, like numbers refer to like objects throughout. Objects in the diagrams are not necessarily drawn to scale.

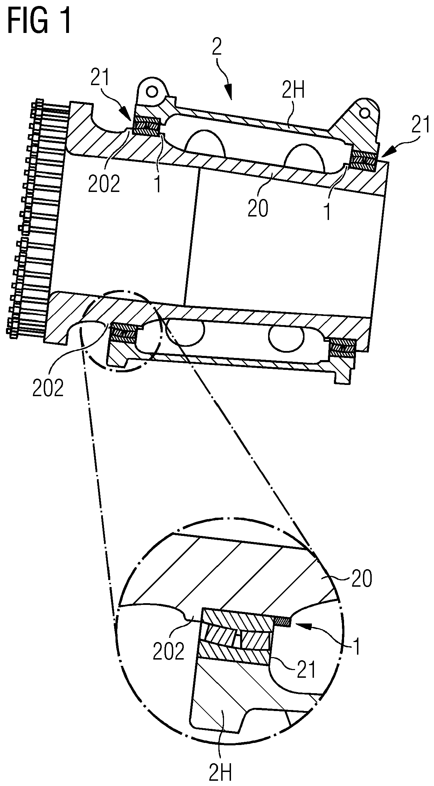

To illustrate an exemplary application of the inventive retaining assembly, Figure 1 shows an axial cross-section through a main bearing unit 2 of a wind turbine drivetrain. The diagram shows a main shaft 20, a drive-end bearing 21, a non-drive-end bearing 21, and a housing 2H which is generally mounted to a bedplate. In the enlarged view, the drawing shows how the inner ring of the drive-end bearing 21 fits tightly between a radially protruding shoulder on one side, and a retaining assembly 1 positioned on the other side. In a large wind turbine, the diameter of the main shaft 20 can be in the order of 1 m at its drive end, and the retaining assembly 1 is dimensioned accordingly. The very high radial and axial loads during operation of the wind turbine can result in deformation of the main shaft 20, and correspondingly large forces act on the retaining assembly 1.

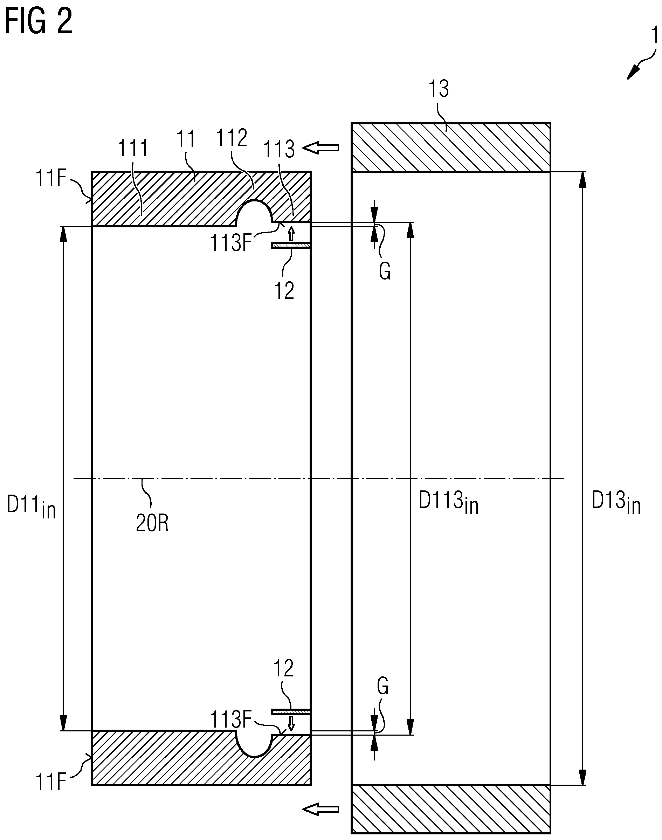

As explained in the introduction, a known retaining means such as a press-fit ring or shaft nut may be unable to reliably hold its bearing in place throughout the service life of the wind turbine. The shaft deformation forces can result in an axial displacement of a press-fit ring, or a tangential displacement (loosening) of a shaft nut. A prior art retaining means therefore cannot reliably prevent axial displacement of the bearing inner ring, resulting in costly downtime and repairs. Figures 2 - 9 illustrate the inventive approach to fixing the axial position of such a bearing 21 about the main shaft 20.

Figure 2 shows a cross-section through components 11, 12, 13 of an exemplary embodiment of the retention assembly 1 prior to mounting on the shaft. The drawing shows a retention ring 11 machined to form a main body 111 and multiple grippers 113, with each gripper 113 connected by a "hinge" 112 to the main body 111. As explained above, the hinge or intermediate region 112 is shaped to permit a desired amount of flexion/extension of the grippers 113 during operation of the drivetrain. This embodiment of the inventive retention assembly 1 further comprises micro-locking shims 12 or micro-locking shims 12 which can be mounted to the inwardly-directed faces 113F of the grippers 113. A micro-locking shim 12 can be attached to the shaft-facing surface 113F of each gripper 113 using a fastener, for example. In its unassembled state as shown here, the retention assembly 1 comprises a choking element 13 with an inner diameter D13in that is slightly smaller than the outer diameter of the retention ring 11.

In this exemplary embodiment, the retention ring 11 comprises a main annular body 111 formed to fit closely about the shaft 20 of the drivetrain (the axis of rotation 20R of the drivetrain is indicated) to achieve an interference fit. The retention ring 11 has an inner diameter D11in in that may be slightly larger than the outer diameter of the rotary shaft 20, allowing the retaining ring 1 to be mounted on the shaft with relative ease. One of its radial outer faces 11F (on its left-hand side in this view) has the form of an annulus which will make contact with a bearing. At its other side, the retention ring 11 comprises an arrangement of axially-extending grippers 113 with the same outer diameter as the main body 111 (i.e. the outer surface of the retention ring 11 is uniformly cylindrical), but with an inner diameter D113in that is larger than the inner diameter D11in of the main body, i.e. larger than the outer diameter of the rotary shaft 20. This leaves a clearance or gap G as indicated so that, when mounting the retention ring 11, the micro-locking shim 12 just clears the shaft 20. In the case of a main shaft 20 with an outer diameter D20 of 1 m or more, the inner diameter D11in of the main body 111 of the retention ring 11 can be slightly larger. A micro-locking shim 12 can have an essentially rectangular shape with a width in the order of 20 mm, and a thickness in the order of 0.5 mm. Such a shim can be made of steel, with spikes of a suitably hard material protruding from both faces.

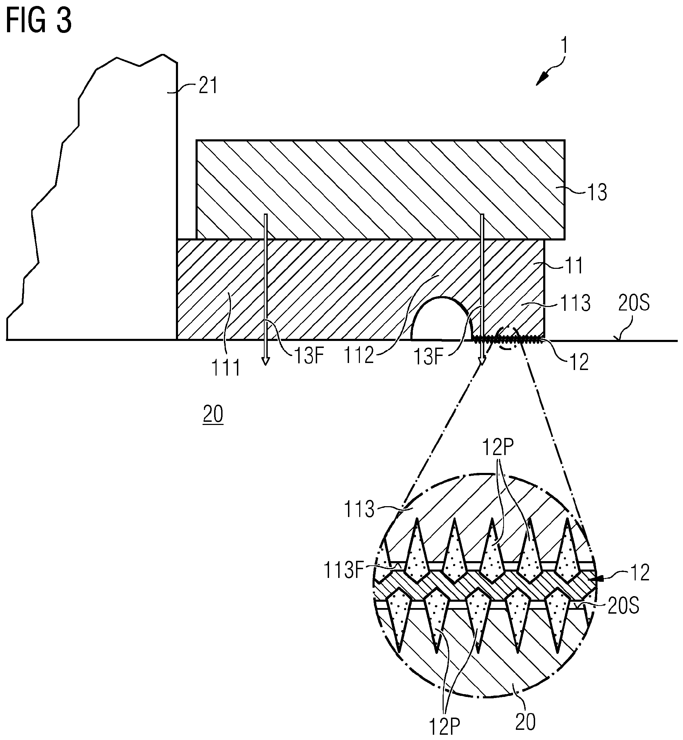

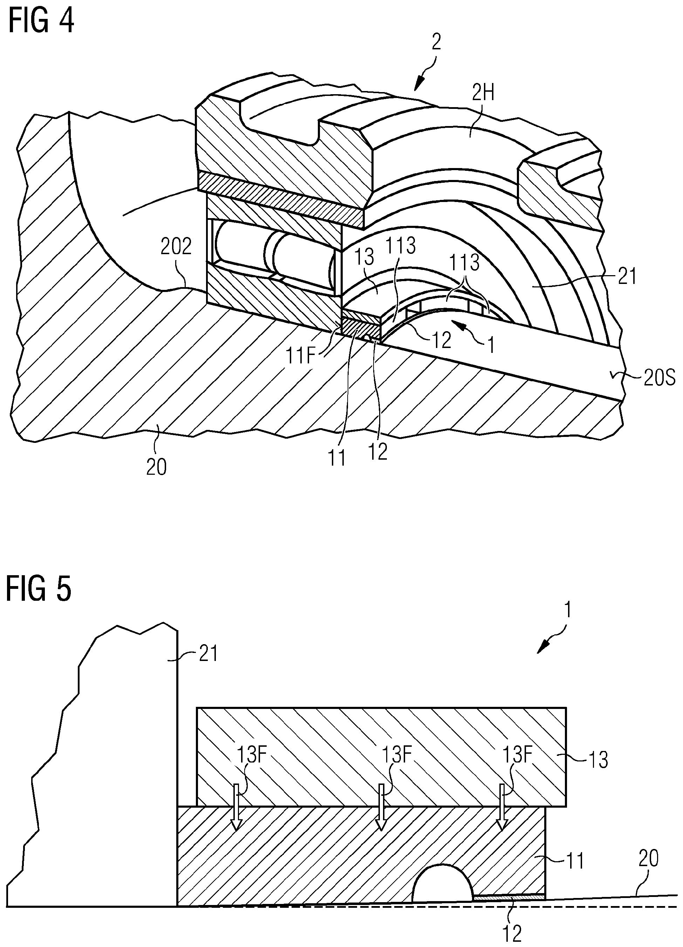

Figure 3 shows the retaining assembly 1 of Figure 2 installed to abut a bearing 21 mounted on the wind turbine drivetrain shaft 20. After pushing the retaining ring 11 onto the shaft 20, the choking ring 13 is mounted about the retaining ring 11. In this exemplary embodiment, the choking ring 13 has the form of a straight hollow cylinder which can be heated so that it expands by an amount sufficient to enlarge its inner diameter so that it can be pushed onto the retaining ring 11. The choking ring 13 then cools and contracts, reducing its inner diameter D13in to achieve the desired interference fit with the retaining ring 11. The resulting inwardly-directed radial force 13F forces the grippers 113 towards the shaft 20, thereby embedding the spikes 12P of the micro-locking shims 12 into the outer surface 20S of the shaft 20. When this step is complete, the spikes 12P of the micro-locking shim 12 are embedded in the opposing faces 20F, 113F of the shaft 20 and the grippers 113. From this point on, the grippers 113 - and therefore the retaining ring 11 - will be unable to move relative to the shaft 20. As a result, any torsional deflection of the main shaft 20 during operation of the wind turbine will be unable to "shift" the retaining ring 11 from its installed position, and the immovable retaining ring 11 will in turn prevent any axial displacement of the bearing 21. Figure 4 shows a perspective view of the retaining assembly 1 of Figure 2 and Figure 3 in place about a drivetrain shaft 20, showing the axis of rotation 20R of the shaft 20 and the central arc θ subtended by a gripper 113.

Figure 5 illustrates the working principle of the inventive retaining assembly 1. During operation of the wind turbine, high loads on the aerodynamic rotor result in deflection of the low-speed shaft 20 away from its nominal position, indicated here in an exaggerated manner. Here, the resulting forces acting on the retaining assembly 1 are absorbed to some extent by the flexibility of the grippers 113, and countered by the inwardly-directed force 13F exerted by the choking ring 13. This radial inwardly-directed force 13F effectively clamps the grippers 113 against the shaft 20, while the embedded spikes 12P of the micro-locking shims 12 prevent axial and tangential displacement of the gripper 113 and therefore prevent axial and tangential displacement of the retaining ring 11. In this way, the retaining ring 11 remains firmly in place throughout the service life of the drivetrain.

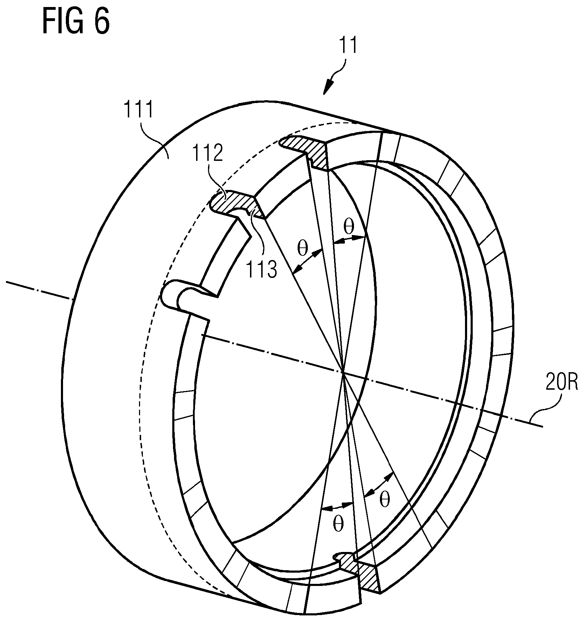

Figure 6 shows a perspective view of an exemplary embodiment of a retaining ring 11 of the inventive retention assembly 1, as it may appear during a manufacturing stage, showing a number of grippers 113 that have been formed (for example by milling) to extend axially from the main body 111 of the retaining ring 11. Each gripper 113 subtends the same central angle θ (the rotation axis 20R of the main shaft is indicated). When complete, the distribution of the flexible elements 113 is essentially equidistant.

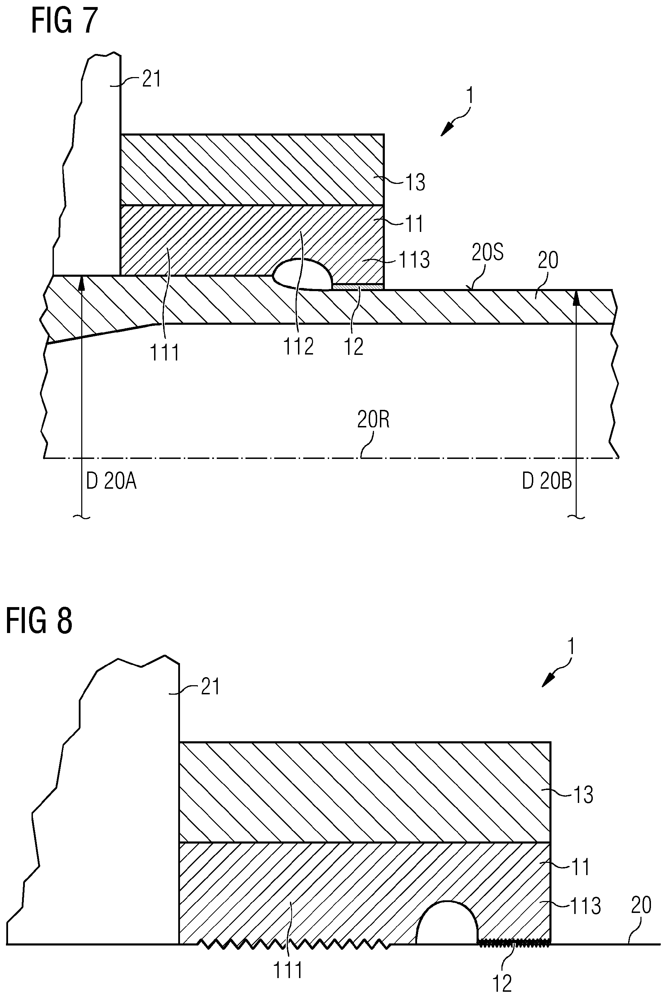

Figure 7 shows another possible embodiment of the inventive retention assembly 1. Here, the main body 111 of the retaining ring 11 of a retaining assembly 1 comprises an inner diameter D11in corresponding to a first outer diameter D20A of the rotary shaft 20. The grippers 113 are shaped on the basis of a smaller outer diameter D20B of the rotary shaft 20.

Figure 8 shows another possible embodiment of the inventive retention assembly 1, showing a realisation with a threaded interface between the rotary shaft 20 and the main body 111 of the retaining ring 11.

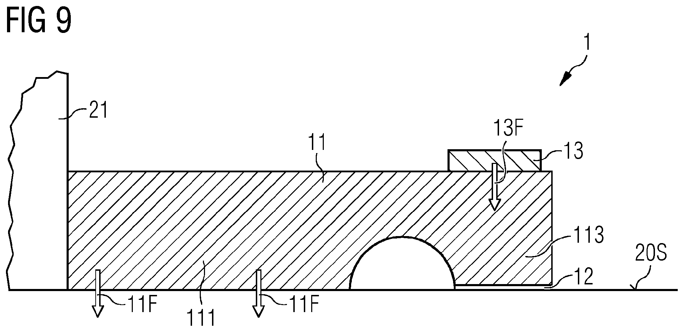

Figure 9 shows another possible embodiment of the inventive retention assembly 1. Micro-locking shims 12 or similar can be deployed in this case also. The retaining ring 11 can be formed to have an inner diameter slightly less than the outer diameter of the shaft 20, and is heated in order to mount it onto the shaft. The retaining ring 11 cools and contracts, thereby exerting a radial inwardly-directed force 11F as indicated. The choking ring 13 in this case is smaller than the choking ring shown in the embodiment of Figure 2, and is also heated prior to mounting it over the grippers 113 of the retaining ring 11. The choking ring 13 then cools and contracts, thereby exerting a radial inwardly-directed force 13F onto the grippers 113, causing the spikes 12P of the micro-locking shims 12 to become embedded as explained above.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. Any pronoun denoting a specific gender shall be understood to apply equally to any gender identity.

## Claims

1. A retention assembly (1) for installation on a rotary shaft (20), comprising
- a retaining ring (11), which retaining ring (11) comprises
- an essentially cylindrical main body (111) dimensioned to fit about the rotary shaft (20) and
- a number of flexible elements (113) extending axially from the main body (111), wherein each flexible element (113) is dimensioned to clear the rotary shaft (20) by a predefined gap (G) when mounting the retaining ring (11) on the rotary shaft (20), and wherein each flexible element (113) is adapted to bear an arrangement of inwardly-directed projections (12P) shaped to engage with the outer surface (20S) of the rotary shaft (20); and wherein the retention assembly (1) further comprises
- a choking ring (13) adapted to exert an inwardly-directed radial force (13F) on the retaining ring (11) during installation of the retention assembly (1) to engage the projections (12P) of the flexible elements (113) with the outer surface (20S) of the rotary shaft (20).

2. A retention assembly according to the preceding claim, wherein a flexible element (113) comprises a micro-locking shim (12) mounted to an inwardly-directed surface (113F) of that flexible element (113).

3. A retention assembly according to the preceding claim, wherein a micro-locking shim (12) comprises a planar body, and an arrangement of projections (12P) protruding from both faces of the planar body.

4. A retention assembly according to the preceding claim, wherein the planar body is a steel plate, and wherein the projections (12P) comprise steel spikes (12P) partially embedded in the steel plate.

5. A retention assembly according to any of the preceding claims, wherein the retaining ring (11) comprises at least 10 flexible elements (113), more preferably at least 20 flexible elements (113).

6. A retention assembly according to any of the preceding claims, wherein a flexible element (113) subtends a central angle (θ) in the order of 10°.

7. A retention assembly according to any of the preceding claims, wherein the distribution of the flexible elements (113) is determined on the basis of the intended position of the retaining ring (11) on the rotary shaft (20).

8. A retention assembly according to any of the preceding claims, comprising a transition region (112) between the main body (111) of the retaining ring (11) and a flexible element (113), which transition region (112) is shaped on the basis of a desired flexibility of the flexible element (113).

9. A retention assembly according to any of the preceding claims, wherein the retaining ring (11) has an essentially uniform outer diameter (D11out) over the main body (111) and the flexible elements (113).

10. A drivetrain comprising
- a rotary shaft (20);
- a number of bearings (21) arranged about the rotary shaft (20); and
- an axial fixation arrangement for each bearing (21, 22), wherein at least one axial fixation arrangement comprises an instance of the inventive retaining assembly (1) mounted about the rotary shaft (20) to abut the corresponding bearing (21).

11. A drivetrain according to the preceding claim, wherein the main body (111) of the retaining ring (11) of a retaining assembly (1) comprises an inner diameter (D11in) corresponding to a first outer diameter (D20A) of the rotary shaft (20), and wherein the flexible elements (113) of that retaining ring (11) are shaped on the basis of a second outer diameter (D20B) of the rotary shaft (20), wherein the second outer diameter (D20B) is less than the first outer diameter (D20A).

12. A drivetrain according to claim 10 or claim 11, comprising a threaded interface between the rotary shaft (20) and the main body (111) of the retaining ring (11) of a retaining assembly (1).

13. A method of assembling a drivetrain according to any of claims 10 to 12, which method comprises steps of
- arranging a number of bearings (21) about the rotary shaft (20); and
- providing an axial fixation arrangement for each bearing (21, 22), wherein at least one axial fixation arrangement is provided by installing a retaining assembly (1) according to any of claims 1 to 9 about the rotary shaft (20) to abut a bearing (21, 22).

14. A method according to the preceding claim, wherein a step of installing a retaining assembly (1) comprises
- placing the retaining ring (11) onto the rotary component (20); and
- mounting the choking ring (13) about the retaining ring (11) to engage the inwardly-directed projections (12P) with the outer surface (20S) of the rotary shaft (20).

15. A method according to claim 13 or claim 14, comprising a step of heating a one-piece choking ring (13) of the retaining assembly (1) prior to mounting that choking ring (13) about the retaining ring (11).
